# FASCICULE DE BREVET EUROPEEN

(11) **EP 3 878 277 B1**
(45) Date de publication et mention de la délivrance du brevet: **09.11.2022**
(21) Numéro de dépôt: 21161193.4
(22) Date de dépôt: 08.03.2021
(51) Int. Cl.: A01M 7/00, B05B 9/04, B05B 12/08, B05B 1/30

(54) **SYSTÈME DE PULVERISATION POUR ENGIN AGRICOLE ET PROCÉDÉ DE PULVERISATION AU MOYEN D'UN TEL SYSTÈME**
SPRÜHSYSTEM FÜR LANDWIRTSCHAFTLICHE MASCHINE UND SPRÜHVERFAHREN MITHILFE DIESES SYSTEMS
SPRAYING SYSTEM FOR AGRICULTURAL MACHINE AND METHOD FOR SPRAYING BY MEANS OF SUCH A SYSTEM

(30) Priorité: 11.03.2020 FR 2002412
(43) Date de publication de la demande: 15.09.2021
(73) Titulaire: Exel Industries, 51200 Epernay (FR)
(72) Inventeur: CHARCOSSET, Philippe, 75009 PARIS (FR)
(74) Mandataire: Argyma

(56) Documents cités:
- EP-A1- 1 428 433
- EP-A2- 2 796 038
- EP-B1- 1 428 433
- EP-B1- 2 796 038
- FR-A1- 2 555 469
- FR-A2- 2 534 451

## Description

### DOMAINE TECHNIQUE

L'invention concerne un système de pulvérisation pour engin agricole destiné à pulvériser un liquide de traitement dans un champ de végétaux à traiter, notamment de grandes cultures, telles que la culture des céréales, ainsi qu'un procédé de pulvérisation au moyen d'un tel système de pulvérisation.

### ÉTAT DE LA TECHNIQUE ANTÉRIEURE

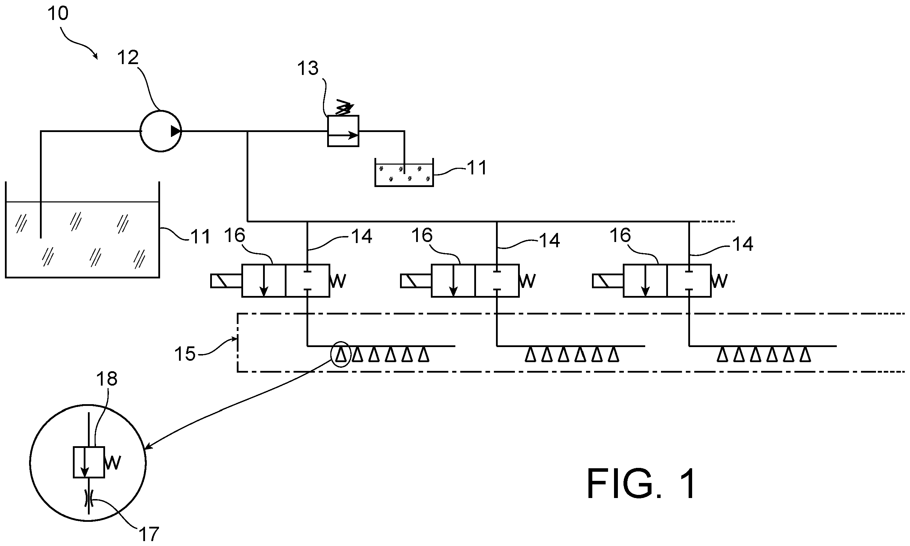

La figure 1 montre un système de pulvérisation agricole 10 pour grandes cultures connu de l'art antérieur.

Ce système de pulvérisation agricole 10 comprend un circuit comprenant lui-même une cuve 11 remplie de liquide de traitement et une pompe 12 prévue pour aspirer du liquide de traitement contenu dans la cuve 11 et pour le refouler, d'une part, vers la cuve 11 par l'intermédiaire d'un régulateur de pression 13 à action pilotée et, d'autre part, vers une pluralité de tronçons 14 d'une rampe de pulvérisation 15 s'étendant transversalement par rapport à une direction longitudinale suivant laquelle le système de pulvérisation agricole 10 avance, les tronçons 14 étant montés en parallèles les uns par rapport aux autres et répartis le long de la rampe de pulvérisation 15.

Le régulateur de pression 13 est prévu pour réguler la pression dans le circuit, en aval de la pompe 12 et en amont du régulateur de pression 13, à une pression seuil. Le régulateur de pression 13 permet ainsi de maintenir la pression dans le circuit globalement à la pression seuil.

Chaque tronçon 14 de la rampe de pulvérisation 15 comprend un distributeur 16 communiquant, en amont, avec la pompe 12 et, en aval, avec une pluralité de buses 17 chacune par l'intermédiaire d'un limiteur de pression 18 à action directe. Lorsque le distributeur 16 d'un tronçon 14 est ouvert, la pompe 12 alimente les buses 17 en liquide de traitement afin de le pulvériser sur des végétaux à traiter.

Les limiteurs de pression 18 sont prévus pour autoriser la circulation de liquide de traitement vers les buses 17, lorsqu'une pression dans les tronçons 14 de la rampe de pulvérisation 15 est supérieure ou égale à une pression de tarage prédéterminée. Les limiteurs de pression 18 permettent ainsi de ne pulvériser du liquide de traitement que lorsque la pression dans les tronçons 14 est supérieure ou égale à la pression de tarage.

Le système de pulvérisation 10 fonctionne de la manière suivante. Au démarrage de la pompe 12, les distributeurs 16 sont fermés, empêchant la pompe 12 d'alimenter les tronçons 14 de la rampe de pulvérisation 15 en liquide de traitement. La pression seuil est en outre fixée à une valeur de pression seuil supérieure ou égale à la pression de tarage des limiteurs de débit. La pression augmente ainsi dans le circuit en aval de la pompe 12 et en amont des tronçons 14 de la rampe de pulvérisation 15.

Lorsque la pression dans le circuit en aval de la pompe 12 et en amont des tronçons 14 de la rampe de pulvérisation 15 atteint la première pression seuil, les distributeurs 16 s'ouvrent de manière à alimenter les tronçons 14 et donc les buses 17 en liquide de traitement. Par ailleurs, la pression dans les tronçons 14 de la rampe de pulvérisation 15 étant nécessairement supérieure à la pression de tarage des limiteurs de pression 18, les buses 17 sont alimentés en liquide de traitement qu'elles pulvérisent alors sur les végétaux à traiter.

Or, lors de l'ouverture des distributeurs 16, le liquide de traitement amorce d'abord tous les tronçons 14 de la rampe de pulvérisation 15 qui sont remplis d'air ou d'eau claire suite à leur rinçage. Toutefois, la distance entre chaque tronçon 14 de la rampe de pulvérisation 15 et la pompe 12 étant différente en fonction du tronçon 14, cet amorçage commence par les tronçons 14 plus proches de la pompe 12 pour terminer par les plus éloignés de la pompe 12. Il en résulte que la surface traitée au sol sur les premiers mètres parcourus par le système de pulvérisation agricole 10 est inférieure à celle qui aurait normalement dû être traitée. Par exemple, lorsque les tronçons 14 qui sont amorcés en premier sont ceux du milieu de la rampe de pulvérisation 15 et les derniers ceux des extrémités de la rampe de pulvérisation 15, il en résulte une surface traitée au sol en forme de trapèze plutôt qu'en forme de rectangle. Sur ces premiers mètres, tous les végétaux qui auraient dû être traités ne l'ont donc pas été, ce qui ne peut que très difficilement être corrigé.

Afin d'éviter cette situation, il est courant d'amorcer les tronçons 14 de la rampe de pulvérisation 15 un certain temps en bout de champ sans avancer le système de pulvérisation agricole 10 et de ne commencer à avancer dans le champ de végétaux à traiter qu'une fois tous les tronçons 15 amorcés.

Cette solution n'est toutefois pas acceptable dans la mesure où elle provoque une surconcentration ou encore un surdosage de liquide de traitement en bout de champ, ce qui est néfaste à la fois pour les cultures et pour l'environnement.

### EXPOSÉ DE L'INVENTION

La présente invention a pour but de pallier les inconvénients mentionnés ci-dessus en proposant un système de pulvérisation agricole dans lequel des tronçons de pulvérisation pourvus de buses de pulvérisation d'un liquide de traitement peuvent être amorcés, sans pulvérisation de liquide de traitement.

Plus précisément, l'invention a pour objet un système de pulvérisation pour engin agricole comprenant :
- une rampe de pulvérisation s'étendant suivant une direction d'extension principale ;
- un circuit comprenant :
   o une cuve destinée à contenir un liquide de traitement,
   o une pompe comprenant une entrée et une sortie, la pompe étant conçue pour aspirer par l'entrée le liquide de traitement contenu dans la cuve et pour refouler à travers la sortie le liquide de traitement aspiré,
   o un régulateur de pression à action pilotée communiquant, en amont, avec la sortie de la pompe et, en aval, avec la cuve ou l'entrée de la pompe, le régulateur de pression étant conçu pour réguler une pression dans le circuit en aval de la pompe et en amont du régulateur de pression à une pression seuil,
   o une pluralité de tronçons de pulvérisation montés sur la rampe de pulvérisation, chaque tronçon de pulvérisation comprenant :
      ▪ au moins un dispositif de pulvérisation comprenant au moins une buse de pulvérisation conçue pour pulvériser du liquide de traitement sur les végétaux à traiter dans le champ,
      ▪ un premier distributeur communiquant, en amont, avec la sortie de la pompe et, en aval, avec le ou les dispositifs de pulvérisation du tronçon de pulvérisation, le premier distributeur étant conçu pour autoriser, dans une position d'ouverture, une circulation de liquide de traitement refoulé par la sortie de la pompe vers le ou les dispositifs de pulvérisation du tronçon de pulvérisation, et pour bloquer, dans une position de fermeture, ladite circulation de liquide de traitement,
      ▪ un limiteur de pression à action directe interposé entre le premier distributeur et la ou les buses de pulvérisation de chaque dispositif de pulvérisation du tronçon de pulvérisation, le ou chaque limiteur de pression étant conçu pour autoriser une circulation de liquide de traitement depuis le premier distributeur vers la ou les buses de pulvérisation avec lesquelles il communique, lorsqu'une pression dans le tronçon de pulvérisation, en amont du limiteur de pression, est supérieure ou égale à une pression de tarage prédéfinie,
   o un deuxième distributeur communiquant, en amont avec chaque tronçon de pulvérisation et, en aval, avec la cuve ou l'entrée de la pompe, le deuxième distributeur étant conçu pour autoriser, dans une position d'ouverture, une circulation de liquide de traitement provenant de chaque tronçon de pulvérisation vers la cuve ou l'entrée de la pompe, et pour bloquer, dans une position de fermeture, ladite circulation de liquide de traitement,
- une unité de commande conçue pour mettre en œuvre une étape d'amorçage du système de pulvérisation comprenant les sous-étapes de :
   o affectation d'une première valeur de pression seuil à la pression seuil du régulateur de pression, la première valeur de pression seuil étant strictement inférieure à la pression de tarage prédéfinie des limiteurs de pression,
   o commutation du premier distributeur de chacun des tronçons de pulvérisation et du deuxième distributeur en position d'ouverture, de manière à obtenir une circulation du liquide de traitement depuis la pompe vers la cuve ou l'entrée de la pompe à travers chacun des tronçons de pulvérisation, sans pulvérisation par la ou les buses de pulvérisation des tronçons de pulvérisation.

Selon des variantes de réalisation qui peuvent être prises ensemble ou séparément :
- le système de pulvérisation comprend en outre un capteur de pression conçu pour mesurer une pression dans le circuit, en aval de la pompe et en amont du régulateur de pression et de chaque tronçon de pulvérisation ;
- l'unité de commande est conçue pour mettre en œuvre la sous-étape de commutation du premier distributeur de chacun des tronçons de pulvérisation et du deuxième distributeur en position d'ouverture, pendant l'étape d'amorçage, lorsque la pression mesurée par le capteur de pression est sensiblement égale à la première valeur de pression seuil ;
- l'unité de commande est conçue pour mettre en œuvre, pendant l'étape d'amorçage et après la sous-étape de commutation du premier distributeur de chacun des tronçons de pulvérisation et du deuxième distributeur en position d'ouverture, une sous-étape d'avertissement de l'utilisateur au moyen d'une interface utilisateur, une durée d'amorçage prédéterminée s'étant écoulée depuis un instant initial prédéfini ;
- l'unité de commande est conçue pour mettre en œuvre, pendant l'étape d'amorçage et après la sous-étape de commutation du premier distributeur de chacun des tronçons de pulvérisation et du deuxième distributeur en position d'ouverture, une sous-étape de commutation du premier distributeur de chacun des tronçons de pulvérisation et du deuxième distributeur en position de fermeture ;
- l'unité de commande est conçue pour mettre en œuvre une étape de pulvérisation comprenant les sous-étapes, ultérieures à l'étape d'amorçage, de :
   o affectation d'une deuxième valeur de pression seuil à la pression seuil du régulateur de pression, la deuxième valeur de pression seuil étant supérieure ou égale à la pression de tarage prédéfinie des limiteurs de pression,
   o commutation du premier distributeur d'au moins un tronçon de pulvérisation en position d'ouverture, de sorte à pulvériser du liquide de traitement au moyen de la ou des buses de pulvérisation, lorsque la pression dans l'au moins un tronçon de pulvérisation atteint la deuxième valeur de pression seuil ;
- l'unité de commande est aussi conçue pour mettre en œuvre, pendant l'étape de pulvérisation, les sous-étapes de :
   o sélection, parmi les tronçons de pulvérisation, préalablement à la sous-étape d'affectation d'une deuxième valeur de pression seuil à la pression seuil du régulateur de pression, d'au moins un tronçon de pulvérisation à alimenter en liquide de traitement pour le pulvériser sur les végétaux à traiter dans le champ,
   o affectation de la deuxième valeur de pression seuil à la pression seuil du régulateur de pression,
   o commutation du premier distributeur de l'au moins un tronçon de pulvérisation sélectionné en position d'ouverture ;
- chaque tronçon de pulvérisation comprend un clapet anti-retour situé en aval du premier distributeur et en parallèle du ou des dispositifs de pulvérisation dudit tronçon de pulvérisation.

L'invention a aussi pour objet un procédé de pulvérisation mis en œuvre au moyen d'un système de pulvérisation tel que précédemment décrit, le procédé comprenant une étape d'amorçage comprenant elle-même les sous-étapes de :
- affectation d'une première valeur de pression seuil à la pression seuil du régulateur de pression, la première valeur de pression seuil étant strictement inférieure à la pression de tarage prédéfinie des limiteurs de pression,
- commutation du premier distributeur de chacun des tronçons de pulvérisation et du deuxième distributeur en position d'ouverture, de manière à obtenir une circulation du liquide de traitement depuis la pompe vers la cuve ou l'entrée de la pompe à travers chacun des tronçons de pulvérisation, sans pulvérisation par la ou les buses de pulvérisation des tronçons de pulvérisation.

Selon des variantes de réalisation qui peuvent être prises ensemble ou séparément :
- pendant l'étape d'amorçage, la sous-étape de commutation du premier distributeur de chacun des tronçons de pulvérisation et du deuxième distributeur en position d'ouverture, est mise en œuvre lorsqu'une pression mesurée dans le circuit, en aval de la pompe et en amont du régulateur de pression et de chaque tronçon de pulvérisation, est sensiblement égale à la première valeur de pression seuil ;
- le procédé de pulvérisation comprend, pendant l'étape d'amorçage et après la sous-étape de commutation du premier distributeur de chacun des tronçons de pulvérisation et du deuxième distributeur en position d'ouverture, une sous-étape d'avertissement de l'utilisateur, une durée d'amorçage prédéterminée s'étant écoulée depuis un instant initial prédéfini ;
- le procédé de pulvérisation comprend, pendant l'étape d'amorçage et après la sous-étape de commutation du premier distributeur de chacun des tronçons de pulvérisation et du deuxième distributeur en position d'ouverture, une sous-étape de commutation du premier distributeur de chacun des tronçons de pulvérisation et du deuxième distributeur en position de fermeture ;
- le procédé de pulvérisation comprend en outre une étape de pulvérisation comprenant les sous-étapes, ultérieures à l'étape d'amorçage, de :
   o affectation d'une deuxième valeur de pression seuil à la pression seuil du régulateur de pression, la deuxième valeur de pression seuil étant supérieure ou égale à la pression de tarage prédéfinie des limiteurs de pression,
   o commutation du premier distributeur d'au moins un tronçon de pulvérisation en position d'ouverture, de sorte à pulvériser du liquide de traitement au moyen de la ou des buses de pulvérisation, lorsque la pression dans l'au moins un tronçon de pulvérisation atteint la deuxième valeur de pression seuil ;
- le procédé de pulvérisation comprend, pendant l'étape de pulvérisation, les sous-étapes de :
   o sélection, parmi les tronçons de pulvérisation, préalablement à la sous-étape d'affectation d'une deuxième valeur de pression seuil à la pression seuil du régulateur de pression, d'au moins un tronçon de pulvérisation à alimenter en liquide de traitement pour le pulvériser sur les végétaux à traiter dans le champ,
   o affectation de la deuxième valeur de pression seuil à la pression seuil du régulateur de pression,
   o commutation du premier distributeur de l'au moins un tronçon de pulvérisation sélectionné en position d'ouverture.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
- la figure 1, déjà décrite, est une vue schématique d'un système de pulvérisation agricole connu de l'art antérieur ;
- la figure 2 est une vue schématique d'un système de pulvérisation pour engin agricole selon un mode de réalisation de l'invention ;
- la figure 3 une vue schématique du système de pulvérisation illustré à la figure 2, pendant une étape d'amorçage ;
- la figure 4 est une vue schématique du système de pulvérisation illustré à la figure 2, pendant une étape de pulvérisation ;
- la figure 5 est un ordinogramme d'un procédé de pulvérisation au moyen du système de pulvérisation illustré aux figures 2 à 4.

### DESCRIPTION DETAILLEE

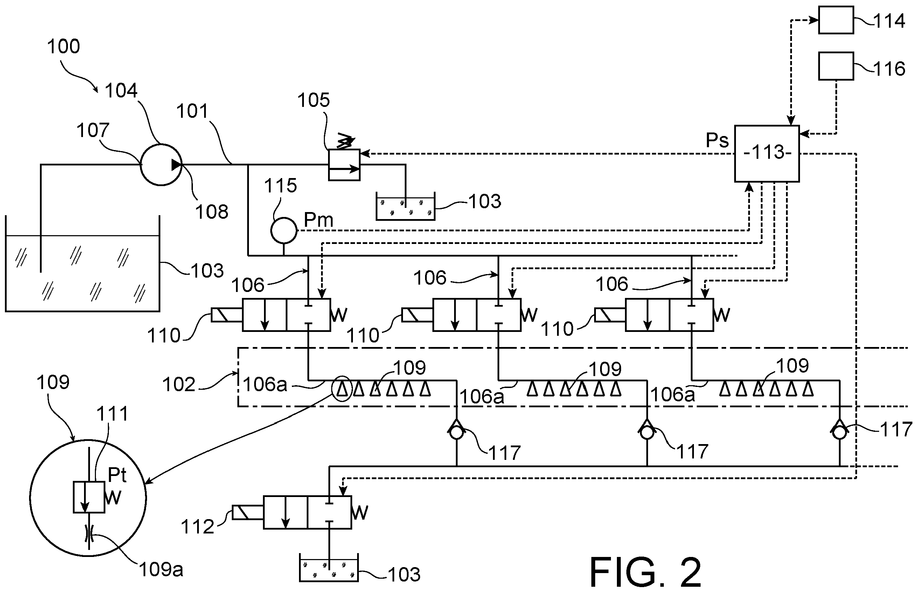

Les figures 2 à 4 montrent un système de pulvérisation 100 pour engin agricole destiné à pulvériser un liquide de traitement dans un champ de végétaux à traiter, notamment de grandes cultures, telles que la culture des céréales, selon un mode de réalisation de l'invention.

Le système de pulvérisation 100 est en contact avec un sol du champ de végétaux à traiter, notamment via des roues (non représentées) permettant son déplacement.

Le système de pulvérisation 100 est par exemple destiné à être tracté par l'engin agricole. En variante (non représentée), le système de pulvérisation 100 est destiné à être porté par l'engin agricole. Encore en variante (non représenté), le système de pulvérisation 100 est automoteur et forme donc l'engin agricole.

Il est adopté à titre non limitatif un repère orthogonal comprenant une direction longitudinale vers l'avant dans le sens d'avancement de l'engin agricole, une direction transversale vers la gauche et une direction verticale vers le haut. Les directions longitudinale et transversale sont horizontales, globalement parallèles au sol du champ de végétaux à traiter.

Le système de pulvérisation 100 comprend un circuit 101, une rampe de pulvérisation 102 s'étendant suivant une direction d'extension principale horizontale, ainsi qu'une unité de commande 113. La direction d'extension principale est par exemple globalement transversale.

Le circuit 101 comprend une cuve 103 destinée à contenir du liquide de traitement, une pompe 104, un régulateur de pression 105 à action pilotée ainsi qu'une pluralité de tronçons de pulvérisation 106 montés en parallèle les uns par rapport aux autres.

Il est entendu par « liquide » que le produit contenu dans la cuve 103 comprend une phase liquide. Il présente par exemple la forme d'une solution ou encore d'une suspension. Il s'agit par exemple d'un mélange d'eau claire et de produit phytosanitaire, appelé « bouillie », ou encore de l'engrais liquide.

La pompe 104 comprend une entrée 107 qui communique avec la cuve 103 et par laquelle la pompe 104 aspire le liquide de traitement contenu dans la cuve 103. La pompe 104 comprend en outre une sortie 108 par laquelle la pompe 104 refoule le liquide de traitement aspiré par l'entrée 107 de la pompe 104.

Dans la suite de la description, les termes « amont » et « aval » tiennent compte du sens de circulation du liquide de traitement dans le circuit 101, qui est imposé par la pompe 104.

Le régulateur de pression 105 communique, en amont, avec la sortie 108 de la pompe 104 et, en aval, avec la cuve 103 ou avec l'entrée 107 de la pompe 104. Le régulateur de pression 105 est en outre conçu pour réguler une pression dans le circuit 101, en aval de la pompe 104 et en amont du régulateur de pression 105, à une pression seuil Ps. Le régulateur de pression 105 permet ainsi de maintenir la pression dans le circuit 101 globalement à la pression seuil Ps.

Le régulateur de pression 105 étant à action pilotée, la valeur de la pression seuil Ps est réglable par l'unité de commande 113.

Les tronçons de pulvérisation 106 sont montés sur la rampe de pulvérisation 102. Ils sont en outre répartis, régulièrement ou non, le long de la rampe de pulvérisation 102.

Chaque tronçon de pulvérisation 106 comprend au moins un dispositif de pulvérisation 109, un premier distributeur 110 et au moins un limiteur de pression 111 à action directe.

Le ou chaque dispositif de pulvérisation 109 du tronçon de pulvérisation 106 forme une bifurcation avec une conduite principale 106a du tronçon de pulvérisation 106. Les dispositifs de pulvérisation 109 sont montés en parallèles les uns avec les autres.

Le ou chaque dispositif de pulvérisation 109 comprend en outre au moins une buse de pulvérisation 109a conçue pour pulvériser du liquide de traitement sur les végétaux à traiter dans le champ, notamment en direction du sol S.

Le dispositif de pulvérisation 109 peut aussi comprendre un porte-buse (non représenté) sur lequel une ou plusieurs buses de pulvérisation 109a sont montées. Le porte-buse est par exemple conçu pour sélectivement raccorder l'une des buses de pulvérisation 109a à la conduite principale 106a.

Le premier distributeur 110 communique, en amont, avec la sortie 108 de la pompe 104, en parallèle du régulateur de pression 105 et du ou des autres tronçons de pulvérisation 106, et, en aval, avec le ou les dispositifs de pulvérisation 109 du tronçon de pulvérisation 106. Le premier distributeur 110 est conçu pour autoriser, dans une position d'ouverture, une circulation de liquide de traitement refoulé par la sortie 108 de la pompe 104 vers le ou les dispositifs de pulvérisation 109 du tronçon de pulvérisation 106, et pour bloquer, dans une position de fermeture, cette circulation de liquide de traitement.

Le premier distributeur 110 est par exemple un distributeur tout ou rien. En variante (non représentée), le premier distributeur 110 est un distributeur proportionnel.

Un limiteur de pression 111 est en outre interposé entre le premier distributeur 110 et la ou les buses de pulvérisation 109a de chaque dispositif de pulvérisation 109 du tronçon de pulvérisation 106. Le ou chaque limiteur de pression 111 est conçu pour autoriser une circulation de liquide de traitement depuis le premier distributeur 110 vers la ou les buses de pulvérisation 109a avec lesquelles il communique, lorsqu'une pression dans le tronçon de pulvérisation 106, en amont du limiteur de pression 111, est supérieure ou égale à une pression de tarage Pt prédéfinie. Ainsi, lorsque la pression dans le tronçon de pulvérisation 106, en amont du ou des limiteurs de pression 111, est supérieure à la pression de tarage Pt du ou des limiteurs de pression 111, du liquide de traitement alimente la ou les buses de pulvérisation 109a qui le pulvérisent.

La pression de tarage Pt est par exemple égale à 0.6 bar.

Le limiteur de pression 111 étant à action directe, la valeur de la pression de tarage Pt n'est pas réglable par l'unité de commande 113.

Le ou chaque limiteur de pression 111 des tronçons de pulvérisation 106 est par exemple intégré au dispositif de pulvérisation 109 avec la ou les buses de pulvérisation 109a duquel il communique, notamment au porte-buse de ce dispositif de pulvérisation 109.

Le ou chaque limiteur de pression 111 est par exemple pourvu d'une membrane obstruant une ouverture du limiteur de pression 111 et coopérant avec un ressort, la pression de tarage Pt étant ainsi définie par la raideur de la membrane élastique et par celle du ressort. Lorsque la pression dans le tronçon de pulvérisation 106a atteint la pression de tarage Pt, la membrane libère l'ouverture du limiteur de pression 111, qui alimente ainsi la ou les buses de pulvérisation 109a avec lesquelles le limiteur de pression 111 communique.

Le circuit 101 comprend encore un deuxième distributeur 112 communiquant, en amont, avec chaque tronçon de pulvérisation 106 et, en aval, avec la cuve 103 ou avec l'entrée 107 de la pompe 104. Le deuxième distributeur 112 est ainsi installé en aval des tronçons de pulvérisation 106, le liquide de traitement circulant dans les tronçons de pulvérisation 106 avant d'atteindre le deuxième distributeur 112. Le deuxième distributeur 112 communique notamment, en amont, avec le premier distributeur 110 et la ou les bifurcations formées par la conduite principale 106a et le ou les dispositifs de pulvérisation 109 de chaque tronçon de pulvérisation 106. Le deuxième distributeur 112 est conçu pour autoriser, dans une position d'ouverture, une circulation de liquide de traitement provenant du premier distributeur 110 de chaque tronçon de pulvérisation 106 vers la cuve 103 ou vers l'entrée 107 de la pompe 104, et pour bloquer, dans une position de fermeture, cette circulation de liquide de traitement.

Le deuxième distributeur 112 est par exemple un distributeur tout ou rien. En variante (non représentée), le deuxième distributeur 112 est un distributeur proportionnel.

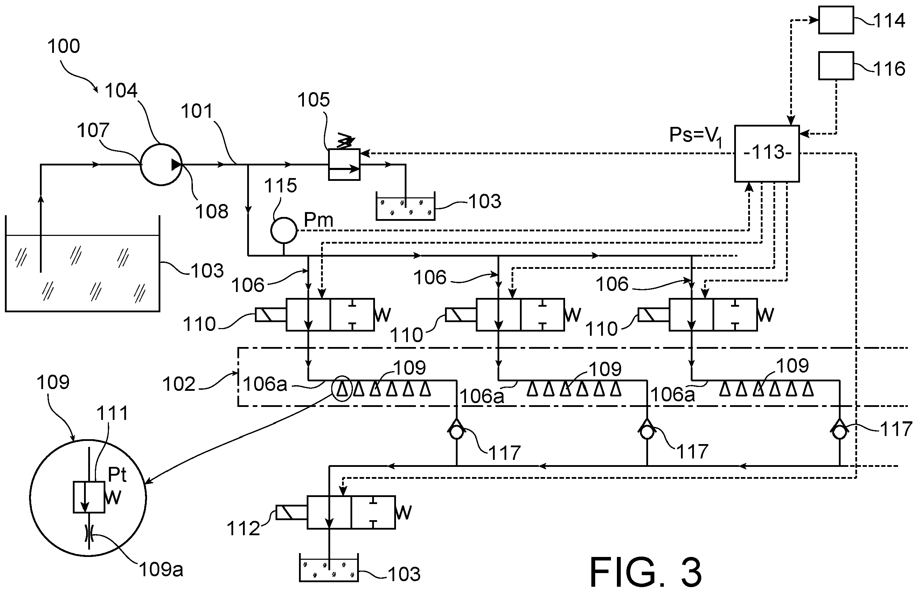

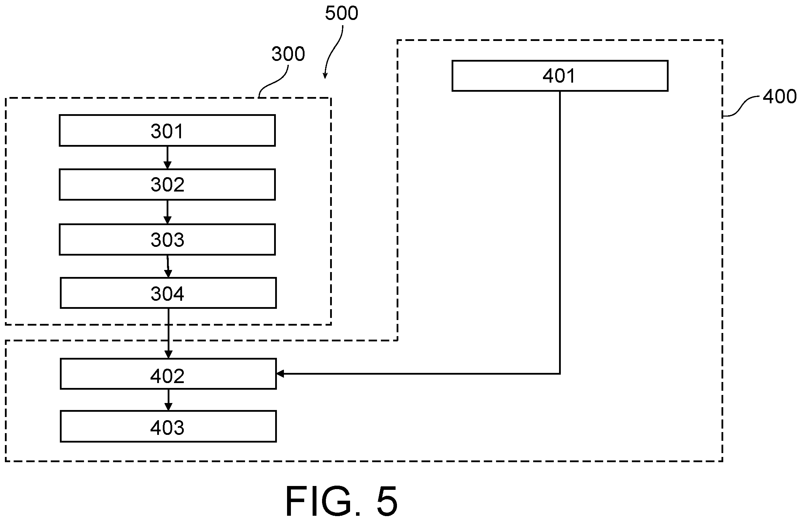

Après démarrage de la pompe 104 de manière à aspirer du liquide de traitement contenu dans la cuve 103, l'unité de commande 113 est conçue pour mettre en œuvre une étape d'amorçage 300 du système de pulvérisation 100 (figure 5). Cette étape d'amorçage 300 comprend les sous-étapes de :
- affectation 301 d'une première valeur de pression seuil V1 à la pression seuil Ps du régulateur de pression 105, la première valeur de pression seuil V1 étant strictement inférieure à la pression de tarage Pt des limiteurs de pression 111 (figures 3 et 5),
- commutation 302 du premier distributeur 110 de chacun des tronçons de pulvérisation 106 et du deuxième distributeur 112 en position d'ouverture, de manière à obtenir une circulation du liquide de traitement depuis la pompe 104 vers la cuve 103 ou vers l'entrée 107 de la pompe 104 à travers chacun des tronçons de pulvérisation 106, sans pulvérisation de fluide par la ou les buses de pulvérisation 109 des tronçons de pulvérisation 106 (figures 3 et 5).

De cette manière, lorsque les premiers distributeurs 110 et le deuxième distributeur 112 commutent en position d'ouverture, le liquide de traitement aspiré par la pompe 104 alimente les tronçons de pulvérisation 106, alors rempli d'air ou d'eau claire suite à leur rinçage, chassant cet air ou cette eau claire vers la cuve 103 à travers le deuxième distributeur 112 et assurant ainsi l'amorçage des tronçons de pulvérisation 106 (figure 3).

Par ailleurs, la première valeur de pression seuil V1 affectée à la pression seuil Ps du régulateur de pression 105 étant strictement inférieure à la pression de tarage Pt des limiteurs de pression 111, la pression dans le circuit 101 est nécessairement inférieure à la pression de tarage Pt des limiteurs de pression 111 qui bloque la circulation de fluide - air/eau claire et liquide de traitement - vers les buses de pulvérisation 109a (figure 3). L'amorçage des tronçons de pulvérisation 106 est donc réalisé sans risque de pulvérisation de fluide par les buses de pulvérisation 109a.

Ainsi, l'engin agricole peut rester à l'arrêt en bout de champ, pendant l'amorçage des tronçons de pulvérisation 106, sans risque de provoquer une surconcentration de liquide de traitement en bout de champ qui serait due à une pulvérisation de fluide - air/eau claire et liquide de traitement - par les buses de pulvérisation 109a. Cela est plus favorable aux cultures et à l'environnement.

Pour cela, l'unité de commande 113 comprend par exemple une interface d'entrée, une interface de sortie, une mémoire de programmes dans laquelle l'étape d'amorçage 300 est enregistrée, une mémoire de données dans laquelle la pression seuil Ps et la pression de tarage Pt sont préenregistrées et un microprocesseur. Au moins un bus de communication relie en outre les interfaces d'entrée et de sortie, la mémoire de programmes, la mémoire de données et le microprocesseur.

L'interface d'entrée est par exemple reliée à une interface utilisateur 114. Pour cela, l'interface utilisateur 114 est par exemple agencée dans une cabine de conduite de l'engin agricole. L'interface utilisateur 114 peut être formée d'un écran tactile.

L'interface de sortie est par exemple elle-même reliée au régulateur de pression 105, aux premiers distributeurs 110, au deuxième distributeur 112 et le cas échéant à l'interface utilisateur 114.

La première valeur de pression seuil V1 est par exemple enregistrée par l'utilisateur dans la mémoire de données de l'unité de commande 113 au moyen de l'interface utilisateur 114. En variante, la première valeur de pression seuil V1 est préenregistrée dans la mémoire de données de l'unité de commande 113.

La première valeur de pression seuil V1 est par exemple égale à 0.4 bar.

Le démarrage de la pompe 104 peut être réalisée manuellement ou pilotée par l'unité de commande 113.

Lors de la sous-étape de commutation 302 des premiers distributeurs 110 et du deuxième distributeur 112 en position d'ouverture, les premiers distributeurs 110 et le deuxième distributeur 112 sont par exemple commutés en position d'ouverture de manière successive. Le deuxième distributeur 112 est par exemple commuté en position d'ouverture avant les premiers distributeurs 110. L'inverse est aussi possible, les premiers distributeurs 110 étant commutés en position d'ouverture avant le deuxième distributeur 112. En variante, les premiers distributeurs 110 et le deuxième distributeur 112 sont par exemple commutés en position d'ouverture de manière simultanée.

Le système de pulvérisation 100 comprend par exemple encore un capteur de pression 115 conçu pour mesurer une pression Pm dans le circuit 101, en aval de la pompe 104 et en amont du régulateur de pression 105 et de chaque tronçon de pulvérisation 106.

L'unité de commande 113 est conçue pour commander une ouverture et une fermeture du régulateur de pression 105 en fonction de la pression Pm mesurée par le capteur de pression 115, de manière à maintenir la pression du circuit 101, en aval de la pompe 104 et en amont du régulateur de pression 105, globalement à la pression seuil Ps. Autrement dit, lorsque la pression Pm mesurée par le capteur de pression 115 est inférieure à la pression seuil Ps, l'unité de commande 113 commande au régulateur de pression 105 de se fermer davantage, de manière à augmenter la pression dans le circuit 101 jusqu'à atteindre la pression seuil Ps. Lorsqu'au contraire, la pression Pm mesurée par le capteur de pression 115 est supérieure à la pression seuil Ps, l'unité de commande 113 commande au régulateur de pression 105 de s'ouvrir davantage, de manière à diminuer la pression dans le circuit 101 jusqu'à atteindre la pression seuil Ps. Il est ainsi possible de réguler la pression dans le circuit 101, et donc de la maintenir globalement à la pression seuil Ps. On comprendra qu'une fois la pression dans le circuit 101 a atteint la pression seuil Ps, la pression dans le circuit 101 oscille autour de la pression seuil Ps, l'écart entre la pression seuil Ps et ces oscillations étant toutefois négligeable relativement à la pression seuil Ps.

Par exemple, l'unité de commande 113 est conçue pour mettre en œuvre la sous-étape de commutation 302 du premier distributeur 110 de chacun des tronçons de pulvérisation 106 et du deuxième distributeur 112 en position d'ouverture, pendant l'étape d'amorçage 300, lorsque la pression Pm mesurée par le capteur de pression 115 est sensiblement égale à la première valeur de pression seuil V1. Autrement dit, la mise en œuvre de la sous-étape de commutation 302 n'est réalisée que lorsque la pression dans le circuit 101, en aval de la pompe 104 et en amont du régulateur de pression 105 et de chaque tronçon de pulvérisation 106, a atteint la pression seuil Ps alors égale à la première valeur de pression seuil V1. Il est entendu par « sensiblement égale » que la pression Pm mesurée par le capteur de pression 115 est égale à la première valeur de pression seuil V1 à 1% d'erreur près.

De cette manière, lorsque les premiers et deuxième distributeurs 110, 112 commutent en position d'ouverture, il n'y a pas de risque de montée subite de pression dans les tronçons de pulvérisation 106 telle qu'elle dépasserait la pression de tarage Pt des limiteurs de pression 111 avant de revenir à la pression seuil Ps, ce qui provoquerait des pertes de fluide - air/eau claire et liquide de traitement - s'échappant des buses de pulvérisation 109a.

Le capteur de pression 115 est par exemple relié à l'interface d'entrée de l'unité de commande 113, de manière à lui communiquer la pression Pm mesurée dans le circuit 101. La pression Pm mesurée dans le circuit 101 par le capteur de pression 115 peut en outre être enregistrée dans la mémoire de données de l'unité de commande 113.

L'unité de commande 113 est par exemple aussi conçue pour mettre en œuvre, pendant l'étape d'amorçage 300 et après la sous-étape de commutation 302 du premier distributeur 110 de chacun des tronçons de pulvérisation 106 et du deuxième distributeur 112 en position d'ouverture, une sous-étape d'avertissement 303 de l'utilisateur par l'intermédiaire de l'interface utilisateur 114, une durée d'amorçage prédéterminée s'étant écoulée depuis un instant initial prédéfini.

De cette manière, l'unité de commande 113 opère une temporisation et avertit l'utilisateur dès lors que l'amorçage des tronçons de pulvérisation 106 est considéré comme terminé. L'utilisateur sait alors qu'il peut commencer le traitement des végétaux du champ.

Pour cela, le système de pulvérisation 100 comprend par exemple un compteur de temps 116, tel qu'une horloge. Le compteur de temps 116 est par exemple relié à l'interface d'entrée de l'unité de commande 113.

La sous-étape d'avertissement 303 est par exemple réalisée par émission d'un signal sonore ou visuel au moyen de l'interface utilisateur 114.

La durée d'amorçage est par exemple enregistrée par l'utilisateur dans la mémoire de données de l'unité de commande 113 au moyen de l'interface utilisateur 114. En variante, la durée d'amorçage est préenregistrée dans la mémoire de données de l'unité de commande 113.

L'instant initial est par exemple défini par le démarrage de la pompe 104, lorsqu'il est pilotée par l'unité de commande 113. En variante, l'instant initial est défini par la mise en œuvre de la sous-étape d'affectation 301 de la première valeur de pression seuil V1 à la pression seuil Ps ou encore par la mise en œuvre de la sous-étape de commutation 302 du premier distributeur 110 de chacun des tronçons de pulvérisation 106 et du deuxième distributeur 112 en position d'ouverture. Le comptage de temps est ainsi initié, lorsque la pompe 104 a démarré ou lorsque la première valeur de pression seuil V1 a été affectée à la pression seuil Ps ou encore lorsque les premiers distributeurs 110 et le deuxième distributeur 112 ont commuté en position d'ouverture.

L'instant initial est par exemple enregistrée par l'utilisateur dans la mémoire de données de l'unité de commande 113 au moyen de l'interface utilisateur 114. En variante, l'instant initial est préenregistrée dans la mémoire de données de l'unité de commande 113.

L'unité de commande 113 peut encore être conçue pour mettre en œuvre, pendant l'étape d'amorçage 300 et après la sous-étape de commutation 302 du premier distributeur 110 de chacun des tronçons de pulvérisation 106 et du deuxième distributeur 112 en position d'ouverture, une sous-étape de commutation 304 du premier distributeur 110 de chacun des tronçons de pulvérisation 106 et du deuxième distributeur 112 en position de fermeture.

Lors de la sous-étape de commutation 304 des premiers distributeurs 110 et du deuxième distributeur 112 en position de fermeture, les premiers distributeurs 110 sont commutés en position de fermeture avant le deuxième distributeur 112. En variante, les premiers distributeurs 110 et le deuxième distributeur 112 sont par exemple commutés en position de fermeture de manière simultanée. Dans ces deux cas, cela permet d'éviter un pic de pression dans les tronçons de pulvérisation 106, ce pic de pression pouvant dépasser la pression de tarage Pt des limiteurs de pression 111 et ainsi entraîner des fuites de liquide de traitement à travers les buses de pulvérisation 109a.

La sous-étape de commutation 304 des premiers distributeurs 110 et du deuxième distributeur 112 en position de fermeture est par exemple réalisée automatiquement par l'unité de commande 113, lorsque la durée d'amorçage s'est écoulée.

En variante, la sous-étape de commutation 304 des premiers distributeurs 110 et du deuxième distributeur 112 en position de fermeture est réalisée par l'unité de commande 113 après réception d'une commande envoyée par l'utilisateur via l'interface utilisateur 114. Cette commande est avantageusement envoyée par l'utilisateur, après qu'il ait été averti, lors de la sous-étape d'avertissement 303, que l'amorçage des tronçons de pulvérisation 106 était considéré comme terminé.

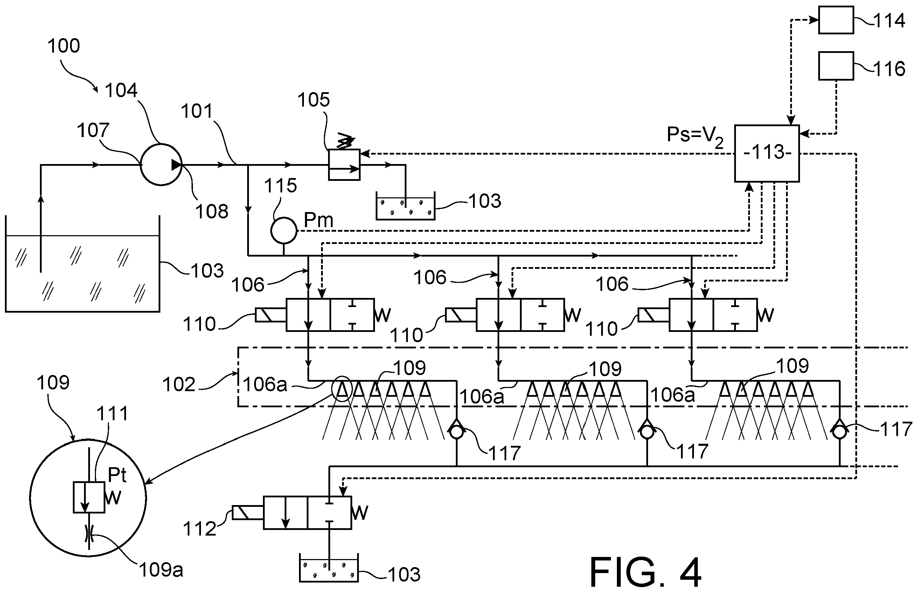

L'unité de commande 113 peut encore être conçue pour mettre en œuvre une étape de pulvérisation 400 (figure 5). Cette étape de pulvérisation 400 comprend les sous-étapes, ultérieures à l'étape d'amorçage 300, de :
- affectation 402 d'une deuxième valeur de pression seuil V2 à la pression seuil Ps du régulateur de pression 105, la deuxième valeur de pression seuil V2 étant supérieure ou égale à la pression de tarage Pt des limiteurs de pression 111 (figures 4 et 5),
- commutation 403 du premier distributeur 110 d'au moins un tronçon de pulvérisation 106 en position d'ouverture, de sorte à pulvériser du liquide de traitement au moyen de la ou des buses de pulvérisation 109, lorsque la pression dans l'au moins un tronçon de pulvérisation 106 atteint la deuxième valeur de pression seuil V2 (figures 4 et 5).

De cette manière, la deuxième valeur de pression seuil V2 affectée à la pression seuil Ps du régulateur de pression 105 étant supérieure ou égale à la pression de tarage Pt des limiteurs de pression 111, la pression dans les tronçons de pulvérisation 106 est nécessairement supérieure ou égale à la pression et tarage Pt des limiteurs de pression 111 qui autorise ainsi la circulation de liquide de traitement vers les buses de pulvérisation 109a et donc sa pulvérisation sur les végétaux à traiter du champ (figure 4).

L'étape de pulvérisation 400 est par exemple enregistrée dans la mémoire de programme de l'unité de commande 113.

La deuxième valeur de pression seuil V2 est par exemple enregistrée par l'utilisateur dans la mémoire de données de l'unité de commande 113 au moyen de l'interface utilisateur 114. En variante, la deuxième valeur de pression seuil V2 est préenregistrée dans la mémoire de données de l'unité de commande 113. Encore en variante, la deuxième valeur de pression seuil V2 est calculée à partir d'une vitesse du système de pulvérisation 100, notamment de l'engin agricole, de la pression Pm mesurée par le capteur de pression 115, d'un débit des buses de pulvérisation 109a en fonction de la pression, ainsi que d'un volume de liquide de traitement à pulvériser par hectare. La vitesse est par exemple mesurée à partir d'un capteur de vitesse équipant le système de pulvérisation agricole 100 ou l'engin agricole. Le débit des buses de pulvérisation 109A en fonction de la pression est par exemple préenregistrée dans la mémoire de données de l'unité de commande 113. Le volume de liquide de traitement à pulvériser par hectare est par exemple enregistrée par l'utilisateur dans la mémoire de données de l'unité de commande 113 au moyen de l'interface utilisateur 114.

L'unité de commande 113 est par exemple conçu pour mettre en œuvre la sous-étape de commutation 403 du premier distributeur 110 d'au moins un tronçon de pulvérisation 106a en position d'ouverture, lorsque la pression Pm mesurée par le capteur de pression 115 est sensiblement égale à la deuxième valeur de pression seuil V2. Autrement dit, la mise en œuvre de la sous-étape de commutation 403 n'est réalisée que lorsque la pression dans le circuit 101, en aval de la pompe 104 et en amont du régulateur de pression 105 et de chaque tronçon de pulvérisation 106, a atteint la pression seuil Ps alors égale à la deuxième valeur de pression seuil V2. Il est entendu par « sensiblement égale » que la pression Pm mesurée par le capteur de pression 115 est égale à la deuxième valeur de pression seuil V2 à 1% d'erreur près.

Par exemple, pendant l'étape de pulvérisation 400, l'unité de commande 113 est aussi conçue pour mettre en œuvre les sous-étapes de :
- sélection 401, parmi les tronçons de pulvérisation 106, d'au moins un tronçon de pulvérisation 106 à alimenter en liquide de traitement pour le pulvériser sur les végétaux à traiter dans le champ,
- affectation 402 de la deuxième valeur de pression seuil V2 à la pression seuil Ps du régulateur de pression 105,
- commutation 403 du premier distributeur 110 de l'au moins un tronçon de pulvérisation 106 sélectionné en position d'ouverture.

La sous-étape de sélection 401 du ou des tronçons de pulvérisation 106 à alimenter en liquide de traitement peut être réalisée préalablement, pendant ou ultérieurement à l'étape d'amorçage 300.

La sous-étape de sélection 401 du ou des tronçons de pulvérisation 106 à alimenter en liquide de traitement est par exemple réalisée manuellement par l'utilisateur, notamment au moyen de l'interface utilisateur 114.

En variante, la sous-étape de sélection 401 du ou des tronçons de pulvérisation 106 à alimenter en liquide de traitement est réalisée automatiquement par l'unité de commande 113, à partir d'une cartographie des végétaux à traiter qui peut être préétablie et d'un capteur de positionnement géographique du système de pulvérisation 100. La cartographie des végétaux à traiter est par exemple enregistrée par l'utilisateur dans la mémoire de données au moyen de l'interface utilisateur 114.

Chaque tronçon de pulvérisation 106 peut encore comprendre un clapet anti-retour 117 situé en aval du premier distributeur 110 et en parallèle du ou des dispositifs de pulvérisation 109 dudit tronçon de pulvérisation 106a. Le clapet anti-retour 117 de chaque tronçon de pulvérisation 106 peut en outre être aussi agencé en aval de la ou des bifurcations formées par la conduite principale 106a et par le ou les dispositifs de pulvérisation 109 dudit tronçon de pulvérisation 106. Cela permet d'éviter, pendant l'étape de pulvérisation 400, que du liquide de traitement circulant dans des tronçons de pulvérisation 106 dont le premier distributeur 110 serait en position d'ouverture puisse venir alimenter, en sens inverse, des tronçons de pulvérisation 106 dont le premier distributeur serait en position de fermeture, ces derniers tronçons de pulvérisation 106 risquant de pulvériser du liquide de traitement et donc d'opérer un surdosage du liquide de traitement administré aux végétaux à traiter.

En variante (non représentée), les limiteurs de pression 111 sont remplacés par des vannes commandées de manière pneumatique. Lesdites vannes sont chacune conçues pour se fermer, lorsqu'une pression d'air ou de gaz est appliquée à la vanne, et pour s'ouvrir et ainsi autoriser la circulation de liquide de traitement vers la ou les buses de traitement 109a, lorsque cette pression d'air ou de gaz est relâchée. Pour cela, il est prévu un circuit pneumatique comprenant une ou plusieurs électrovannes pilotées par l'unité de commande 113 pour appliquer/relâcher la pression d'air ou de gaz appliquée aux vannes. La valeur de la pression d'air ou de gaz à appliquer aux vannes pour les fermer n'est pas réglable par l'unité de commande 113. Elle est strictement supérieure à la première et à la deuxième valeur de pression seuil V1, V2. Bien sûr, dans ce cas, la valeur de la pression seuil Ps du régulateur de pression 105 n'est pas fixée en fonction d'une pression de tarage Pt des limiteurs de pression 111. Pendant l'étape d'amorçage 300, la pression d'air ou de gaz est appliquée aux vannes, de manière à les maintenir fermées. Les première et deuxième valeurs de pression seuil V1, V2 peuvent être différentes, la première valeur de pression seuil V1 n'étant pas nécessairement inférieure à la deuxième valeur de pression seuil V2. Les première et deuxième valeurs de pression seuil V1, V2 peuvent en outre être égales et n'être affectées à la pression seuil Ps du régulateur de pression 105 qu'une fois lors de l'étape d'amorçage 300.

En variante (non représentée), les limiteurs de pression 111 sont remplacés par des vannes commandées de manière pneumatique. Lesdites vannes sont chacune conçues pour se fermer, lorsqu'une pression d'air ou de gaz est appliquée à la vanne, et pour s'ouvrir et ainsi autoriser la circulation de liquide de traitement vers la ou les buses de traitement 109a, lorsque cette pression d'air ou de gaz est relâchée. Pour cela, il est prévu un circuit pneumatique comprenant une ou plusieurs électrovannes pilotées par l'unité de commande 113 pour appliquer/relâcher la pression d'air ou de gaz appliquée aux vannes. La valeur de la pression d'air ou de gaz à appliquer aux vannes pour les fermer est réglable par l'unité de commande 113. Elle est strictement supérieure à la première et à la deuxième valeur de pression seuil V1, V2. Bien sûr, dans ce cas, la valeur de la pression seuil Ps du régulateur de pression 105 n'est pas fixée en fonction d'une pression de tarage Pt des limiteurs de pression 111. Pendant l'étape d'amorçage 300, la pression d'air ou de gaz est appliquée aux vannes, de manière à les maintenir fermées. Par ailleurs, la valeur de la pression d'air ou de gaz à appliquer aux vannes pour les fermer étant réglable, il est possible, lors de l'étape d'amorçage 300, d'augmenter la valeur de la pression d'air ou de gaz à appliquer aux vannes pour les fermer, de sorte que la première valeur de pression seuil V1 peut elle-même être augmentée, permettant ainsi un amorçage plus rapide des tronçons de pulvérisation 106. Les première et deuxième valeurs de pression seuil V1, V2 peuvent être différentes, la première valeur de pression seuil V1 n'étant pas nécessairement inférieure à la deuxième valeur de pression seuil V2. Les première et deuxième valeurs de pression seuil V1, V2 peuvent aussi être égales et n'être affectées à la pression seuil Ps du régulateur de pression 105 qu'une fois lors de l'étape d'amorçage 300.

Encore en variante (non représentée), les limiteurs de pression 111 sont remplacés par des vannes pilotées par l'unité de commande 113 par modulation de largeur d'impulsion (ou « PWM » pour « Pulse Width Modulation » en terminologie anglosaxonne). Pour cela, les vannes sont chacune équipées d'un solénoïde commandé par modulation de largeur d'impulsion de manière à ouvrir et fermer la vanne de manière cyclique et à contrôler la durée d'ouverture de la vanne par cycle. Bien sûr, dans ce cas, la valeur de la pression seuil Ps du régulateurde pression 105 n'est pas fixée en fonction d'une pression de tarage Pt des limiteurs de pression 111. Pendant l'étape d'amorçage 300, les vannes sont maintenues fermées par l'unité de commande 113. Les première et deuxième valeurs de pression seuil V1, V2 peuvent être différentes, la première valeur de pression seuil V1 n'étant pas nécessairement inférieure à la deuxième valeur de pression seuil V2. Les première et deuxième valeurs de pression seuil V1, V2 peuvent aussi être égales et n'être affectées à la pression seuil Ps du régulateur de pression 105 qu'une fois lors de l'étape d'amorçage 300.

La figure 5 montre un procédé de pulvérisation 500 d'un liquide de traitement sur des végétaux à traiter au moyen du système de pulvérisation 100.

Le procédé de pulvérisation 500 est par exemple enregistré dans la mémoire de programme de l'unité de commande 113 du système de pulvérisation 100.

Le procédé de pulvérisation 500 comprend, après démarrage de la pompe 104 de manière à aspirer du liquide de traitement contenu dans la cuve 103, une étape d'amorçage 300 comprenant elle-même les sous-étapes de :
- affectation 301 d'une première valeur de pression seuil V1 à la pression seuil Ps du régulateur de pression 105, la première valeur de pression seuil V1 étant strictement inférieure à la pression de tarage Pt des limiteurs de pression 111,
- commutation 302 du premier distributeur 110 de chacun des tronçons de pulvérisation 106 et du deuxième distributeur 112 en position d'ouverture, de manière à obtenir une circulation du liquide de traitement depuis la pompe 104 vers la cuve 103 ou vers l'entrée 107 de la pompe 104 à travers chacun des tronçons de pulvérisation 106, sans pulvérisation de liquide de traitement par la ou les buses de pulvérisation 109 des tronçons de pulvérisation 106.

Lors de la sous-étape de commutation 302 des premiers distributeurs 110 et du deuxième distributeur 112 en position d'ouverture, les premiers distributeurs 110 et le deuxième distributeur 112 sont par exemple commutés en position d'ouverture de manière successive. Le deuxième distributeur 112 est par exemple commuté en position d'ouverture avant les premiers distributeurs 110. L'inverse est aussi possible, les premiers distributeurs 110 étant commutés en position d'ouverture avant le deuxième distributeur 112. En variante, les premiers distributeurs 110 et le deuxième distributeur 112 sont par exemple commutés en position d'ouverture de manière simultanée.

Pendant l'étape d'amorçage 300, la sous-étape de commutation 302 du premier distributeur 110 de chacun des tronçons de pulvérisation 106 et du deuxième distributeur 112 en position d'ouverture, est par exemple mise en œuvre lorsqu'une pression Pm mesurée dans le circuit 101, en aval de la pompe 104 et en amont du régulateur de pression 105 et de chaque tronçon de pulvérisation 106, est sensiblement égale à la première valeur de pression seuil V1.

Le procédé de pulvérisation 500 peut encore comprendre, pendant l'étape d'amorçage 300 et après la sous-étape de commutation 302 du premier distributeur 110 de chacun des tronçons de pulvérisation 106 et du deuxième distributeur 112 en position d'ouverture, une sous-étape d'avertissement 303 de l'utilisateur, notamment par émission d'un signal sonore ou visuel, une durée d'amorçage prédéterminée s'étant écoulée depuis un instant initial prédéfini.

Le procédé de pulvérisation 500 comprend par exemple aussi, pendant l'étape d'amorçage 300 et après la sous-étape de commutation 302 du premier distributeur 110 de chacun des tronçons de pulvérisation 106 et du deuxième distributeur 112 en position d'ouverture, une sous-étape de commutation 304 du premier distributeur 110 de chacun des tronçons de pulvérisation 106 et du deuxième distributeur 112 en position de fermeture.

Lors de la sous-étape de commutation 304 des premiers distributeurs 110 et du deuxième distributeur 112 en position de fermeture, les premiers distributeurs 110 sont commutés en position de fermeture avant le deuxième distributeur 112. En variante, les premiers distributeurs 110 et le deuxième distributeur 112 sont par exemple commutés en position de fermeture de manière simultanée. Dans ces deux cas, cela permet d'éviter un pic de pression dans les tronçons de pulvérisation 106, ce pic de pression pouvant dépasser la pression de tarage Pt des limiteurs de pression 111 et ainsi entraîner des fuites de liquide de traitement à travers les buses de pulvérisation 109a.

La sous-étape de commutation 304 des premiers distributeurs 110 et du deuxième distributeur 112 en position de fermeture peut être mise en œuvre automatiquement, lorsque la durée d'amorçage s'est écoulée, ou après qu'une commande ait été envoyée par l'utilisateur en ce sens. Cette commande est avantageusement envoyée par l'utilisateur, après qu'il ait été averti, lors de la sous-étape d'avertissement 303, que l'amorçage des tronçons de pulvérisation 106 est considéré comme terminé.

Le procédé de pulvérisation 500 peut encore comprendre une étape de pulvérisation 400 comprenant les sous-étapes, ultérieures à l'étape d'amorçage 300, de :
- affectation 402 d'une deuxième valeur de pression seuil V2 à la pression seuil Ps du régulateur de pression 105, la deuxième valeur de pression seuil V2 étant supérieure ou égale à la pression de tarage Pt prédéfinie des limiteurs de pression 111,
- commutation 403 du premier distributeur 110 d'au moins un tronçon de pulvérisation 106 en position d'ouverture, de sorte à pulvériser du liquide de traitement au moyen de la ou des buses de pulvérisation 109, lorsque la pression dans l'au moins un tronçon de pulvérisation 106 atteint la deuxième valeur de pression seuil V2.

Par exemple, pendant l'étape de pulvérisation 400, le procédé de pulvérisation 500 comprend les sous-étapes de :
- sélection 401, parmi les tronçons de pulvérisation 106, d'au moins un tronçon de pulvérisation 106 à alimenter en liquide de traitement pour le pulvériser sur les végétaux à traiter dans le champ,
- affectation 402 de la deuxième valeur de pression seuil V2 à la pression seuil Ps du régulateur de pression 105,
- commutation 403 du premier distributeur 110 de l'au moins un tronçon de pulvérisation 106 sélectionné en position d'ouverture.

La sous-étape de sélection 401 du ou des tronçons de pulvérisation 106 à alimenter en liquide de traitement peut être réalisée préalablement, pendant ou ultérieurement à l'étape d'amorçage 300.

La sous-étape de sélection 401 du ou des tronçons de pulvérisation 106 à alimenter en liquide de traitement est par exemple réalisée manuellement par l'utilisateur. En variante, la sous-étape de sélection 401 du ou des tronçons de pulvérisation 106 à alimenter en liquide de traitement est réalisée automatiquement, à partir d'une cartographie des végétaux à traiter préétablie et du positionnement géographique du système de pulvérisation 100.

La sous-étape de commutation 405 du premier distributeur 110 de l'au moins un tronçon de pulvérisation 106a en position d'ouverture est par exemple mise en œuvre, lorsque la pression Pm mesurée par le capteur de pression 115 est sensiblement égale à la deuxième valeur de pression seuil V2.

Le système de pulvérisation 100 et le procédé de pulvérisation 500 décrits ci-dessus sont particulièrement avantageux car ils permettent de réaliser un amorçage des tronçons de pulvérisation 106, sans pulvérisation de fluide - air/eau claire et liquide de traitement - et donc sans perte et sans surdosage de liquide de traitement dans le champ.

## Revendications

1. Système de pulvérisation (100) pour engin agricole comprenant une rampe de pulvérisation (102) s'étendant suivant une direction d'extension principale et un circuit (101) comprenant :
- une cuve (103) destinée à contenir un liquide de traitement ;
- une pompe (104) comprenant une entrée (107) et une sortie (108), la pompe (104) étant conçue pour aspirer par l'entrée (107) le liquide de traitement contenu dans la cuve (103) et pour refouler à travers la sortie (108) le liquide de traitement aspiré ;
- un régulateur de pression (105) à action pilotée communiquant, en amont, avec la sortie (108) de la pompe (104) et, en aval, avec la cuve (103) ou l'entrée (107) de la pompe (104), le régulateur de pression (105) étant conçu pour réguler une pression dans le circuit (101) en aval de la pompe (104) et en amont du régulateur de pression (105) à une pression seuil (Ps) ;
- une pluralité de tronçons de pulvérisation (106) montés sur la rampe de pulvérisation (102), chaque tronçon de pulvérisation (106) comprenant :
o au moins un dispositif de pulvérisation (109) comprenant au moins une buse de pulvérisation (109a) conçue pour pulvériser du liquide de traitement sur les végétaux à traiter dans le champ,
o un premier distributeur (110) communiquant, en amont, avec la sortie (108) de la pompe (104) et, en aval, avec le ou les dispositifs de pulvérisation (109) du tronçon de pulvérisation (106), le premier distributeur (110) étant conçu pour autoriser, dans une position d'ouverture, une circulation de liquide de traitement refoulé par la sortie (108) de la pompe (104) vers le ou les dispositifs de pulvérisation (109) du tronçon de pulvérisation (106), et pour bloquer, dans une position de fermeture, ladite circulation de liquide de traitement,
o un limiteur de pression (111) à action directe interposé entre le premier distributeur (110) et la ou les buses de pulvérisation (109a) de chaque dispositif de pulvérisation (109) du tronçon de pulvérisation (106), le ou chaque limiteur de pression (111) étant conçu pour autoriser une circulation de liquide de traitement depuis le premier distributeur (110) vers la ou les buses de pulvérisation (109a) avec lesquelles il communique, lorsqu'une pression dans le tronçon de pulvérisation (106), en amont du limiteur de pression (111), est supérieure ou égale à une pression de tarage (Pt) prédéfinie ;
- une unité de commande (113) ;
le système de pulvérisation (100) étant **caractérisé en ce que** :
- le circuit (101) comprend en outre un deuxième distributeur (112) communiquant, en amont avec chaque tronçon de pulvérisation (106) et, en aval, avec la cuve (103) ou l'entrée (107) de la pompe (104), le deuxième distributeur (112) étant conçu pour autoriser, dans une position d'ouverture, une circulation de liquide de traitement provenant de chaque tronçon de pulvérisation (106) vers la cuve (103) ou l'entrée (107) de la pompe (104), et pour bloquer, dans une position de fermeture, ladite circulation de liquide de traitement ; et
- l'unité de commande (113) est conçue pour mettre en oeuvre une étape d'amorçage (300) du système de pulvérisation (100) comprenant les sous-étapes de :
o affectation (301) d'une première valeur de pression seuil (V1) à la pression seuil (Ps) du régulateur de pression (105), la première valeur de pression seuil (V1) étant strictement inférieure à la pression de tarage (Pt) prédéfinie des limiteurs de pression (111),
o commutation (302) du premier distributeur (110) de chacun des tronçons de pulvérisation (106) et du deuxième distributeur (112) en position d'ouverture, de manière à obtenir une circulation du liquide de traitement depuis la pompe (104) vers la cuve (103) ou l'entrée (107) de la pompe (104) à travers chacun des tronçons de pulvérisation (106), sans pulvérisation par la ou les buses de pulvérisation (109) des tronçons de pulvérisation (106).

2. Système de pulvérisation (100) selon la revendication 1, comprenant en outre un capteur de pression (115) conçu pour mesurer une pression (Pm) dans le circuit (101), en aval de la pompe (104) et en amont du régulateur de pression (105) et de chaque tronçon de pulvérisation (106), et dans lequel l'unité de commande (113) est conçue pour mettre en œuvre la sous-étape de commutation (302) du premier distributeur (110) de chacun des tronçons de pulvérisation (106) et du deuxième distributeur (112) en position d'ouverture, pendant l'étape d'amorçage (300), lorsque la pression (Pm) mesurée par le capteur de pression (115) est sensiblement égale à la première valeur de pression seuil (V1).

3. Système de pulvérisation (100) selon la revendication 1 ou la revendication 2, dans lequel l'unité de commande (113) est conçue pour mettre en œuvre, pendant l'étape d'amorçage (300) et après la sous-étape de commutation (302) du premier distributeur (110) de chacun des tronçons de pulvérisation (106) et du deuxième distributeur (112) en position d'ouverture, une sous-étape d'avertissement (303) de l'utilisateur au moyen d'une interface utilisateur (114), une durée d'amorçage prédéterminée s'étant écoulée depuis un instant initial prédéfini.

4. Système de pulvérisation (100) selon l'une des revendications 1 à 3, dans lequel l'unité de commande (113) est conçue pour mettre en œuvre, pendant l'étape d'amorçage (300) et après la sous-étape de commutation (302) du premier distributeur (110) de chacun des tronçons de pulvérisation (106) et du deuxième distributeur (112) en position d'ouverture, une sous-étape de commutation (304) du premier distributeur (110) de chacun des tronçons de pulvérisation (106) et du deuxième distributeur (112) en position de fermeture.

5. Système de pulvérisation (100) selon la revendication 4, dans lequel l'unité de commande (113) est en outre conçue pour mettre en œuvre une étape de pulvérisation (400) comprenant les sous-étapes, ultérieures à l'étape d'amorçage (300), de :
- affectation (402) d'une deuxième valeur de pression seuil (V2) à la pression seuil (Ps) du régulateur de pression (105), la deuxième valeur de pression seuil (V2) étant supérieure ou égale à la pression de tarage (Pt) prédéfinie des limiteurs de pression (111),
- commutation (403) du premier distributeur (110) d'au moins un tronçon de pulvérisation (106) en position d'ouverture, de sorte à pulvériser du liquide de traitement au moyen de la ou des buses de pulvérisation (109), lorsque la pression dans l'au moins un tronçon de pulvérisation (106) atteint la deuxième valeur de pression seuil (V2).

6. Système de pulvérisation (100) selon l'une des revendications 1 à 5, dans lequel chaque tronçon de pulvérisation (106) comprend un clapet anti-retour (117) situé en aval du premier distributeur (110) et en parallèle du ou des dispositifs de pulvérisation (109) dudit tronçon de pulvérisation (106).

7. Procédé de pulvérisation (500) au moyen d'un système de pulvérisation (100) selon l'une des revendications 1 à 6, le procédé comprenant une étape d'amorçage (300) comprenant elle-même les sous-étapes de :
- affectation (301) d'une première valeur de pression seuil (V1) à la pression seuil (Ps) du régulateur de pression (105), la première valeur de pression seuil (V1) étant strictement inférieure à la pression de tarage (Pt) prédéfinie des limiteurs de pression (111),
- commutation (302) du premier distributeur (110) de chacun des tronçons de pulvérisation (106) et du deuxième distributeur (112) en position d'ouverture, de manière à obtenir une circulation du liquide de traitement depuis la pompe (104) vers la cuve (103) ou l'entrée (107) de la pompe (104) à travers chacun des tronçons de pulvérisation (106), sans pulvérisation par la ou les buses de pulvérisation (109) des tronçons de pulvérisation (106).

8. Procédé de pulvérisation (500) selon la revendication 7, dans lequel, pendant l'étape d'amorçage (300), la sous-étape de commutation (302) du premier distributeur (110) de chacun des tronçons de pulvérisation (106) et du deuxième distributeur (112) en position d'ouverture, est mise en œuvre lorsqu'une pression (Pm) mesurée dans le circuit (101), en aval de la pompe (104) et en amont du régulateur de pression (105) et de chaque tronçon de pulvérisation (106), est sensiblement égale à la première valeur de pression seuil (V1).

9. Procédé de pulvérisation (500) selon la revendication 7 ou la revendication 8, comprenant, pendant l'étape d'amorçage (300) et après la sous-étape de commutation (302) du premier distributeur (110) de chacun des tronçons de pulvérisation (106) et du deuxième distributeur (112) en position d'ouverture, une sous-étape d'avertissement (303) de l'utilisateur, une durée d'amorçage prédéterminée s'étant écoulée depuis un instant initial prédéfini.

10. Procédé de pulvérisation (500) selon l'une des revendications 7 à 9, comprenant, pendant l'étape d'amorçage (300) et après la sous-étape de commutation (302) du premier distributeur (110) de chacun des tronçons de pulvérisation (106) et du deuxième distributeur (112) en position d'ouverture, une sous-étape de commutation (304) du premier distributeur (110) de chacun des tronçons de pulvérisation (106) et du deuxième distributeur (112) en position de fermeture.

11. Procédé de pulvérisation (500) selon la revendication 10, comprenant en outre une étape de pulvérisation (400) comprenant les sous-étapes, ultérieures à l'étape d'amorçage (300), de :
- affectation (402) d'une deuxième valeur de pression seuil (V2) à la pression seuil (Ps) du régulateur de pression (105), la deuxième valeur de pression seuil (V2) étant supérieure ou égale à la pression de tarage (Pt) prédéfinie des limiteurs de pression (111),
- commutation (403) du premier distributeur (110) d'au moins un tronçon de pulvérisation (106) en position d'ouverture, de sorte à pulvériser du liquide de traitement au moyen de la ou des buses de pulvérisation (109), lorsque la pression dans l'au moins un tronçon de pulvérisation (106) atteint la deuxième valeur de pression seuil (V2).

## Patentansprüche

1. Sprühsystem (100) für eine landwirtschaftliche Maschine, das ein Sprühgestänge (102), das sich gemäß einer Hauptausdehnungsrichtung erstreckt, und einen Kreis (101) umfasst, der umfasst:
- einen Tank (103), der bestimmt ist, eine Behandlungsflüssigkeit zu enthalten;
- eine Pumpe (104), die einen Einlass (107) und einen Auslass (108) umfasst, wobei die Pumpe (104) ausgelegt ist, um durch den Einlass (107) die im Tank (103) enthaltene Behandlungsflüssigkeit anzusaugen und um die angesaugte Behandlungsflüssigkeit durch den Auslass (108) zu pumpen;
- einen Druckregler (105) mit gesteuerter Aktion, der stromaufwärts mit dem Auslass (108) der Pumpe (104) und stromabwärts mit dem Tank (103) oder dem Einlass (107) der Pumpe (104) kommuniziert, wobei der Druckregler (105) eingerichtet ist, um einen Druck im Kreis (101) nach der Pumpe (104) und vor dem Druckregler (105) auf einen Schwellendruck (Ps) einzustellen;
- eine Vielzahl von Sprühabschnitten (106), die auf dem Sprühgestänge (102) angebracht sind, wobei jeder Sprühabschnitt (106) umfasst:
o mindestens eine Sprühvorrichtung (109), die mindestens eine Sprühdüse (109a) umfasst, die ausgelegt ist, um Behandlungsflüssigkeit auf die auf dem Feld zu behandelnden Pflanzen zu sprühen,
o einen ersten Verteiler (110), der stromaufwärts mit dem Auslass (108) der Pumpe (104) und stromabwärts mit der oder den Sprühvorrichtungen (109) des Sprühabschnitts (106) kommuniziert, wobei der erste Verteiler (110) ausgelegt ist, um in einer geöffneten Position eine Zirkulation von Behandlungsflüssigkeit, die durch den Auslass (108) der Pumpe (104) gepumpt wurde, zu der oder den Sprühvorrichtungen (109) des Sprühabschnitts (106) zu gestatten und um in einer geschlossenen Position die Zirkulation von Behandlungsflüssigkeit zu blockieren,
o einen Druckbegrenzer (111) mit direkter Aktion, der zwischen dem ersten Verteiler (110) und der oder den Sprühdüsen (109a) jeder Sprühvorrichtung (109) des Sprühabschnitts (106) angeordnet ist, wobei der oder jeder Druckbegrenzer (111) eingerichtet ist, um eine Zirkulation von Behandlungsflüssigkeit ab dem ersten Verteiler (110) zu der oder den Sprühdüsen (109a) zu gestatten, mit denen er kommuniziert, wenn ein Druck im Sprühabschnitt (106) stromaufwärts zum Druckbegrenzer (111) größer als oder gleich einem vorher festgelegten Eichdruck (Pt) ist;
- eine Steuereinheit (113);
wobei das Sprühsystem (100) **dadurch gekennzeichnet ist, dass**:
- der Kreis (101) ferner einen zweiten Verteiler (112) umfasst, der stromaufwärts mit jedem Sprühabschnitt (106) und stromabwärts mit dem Tank (103) oder dem Einlass (107) der Pumpe (104) kommuniziert, wobei der zweite Verteiler (112) eingerichtet ist, um in einer geöffneten Position eine Zirkulation von Behandlungsflüssigkeit, die von jedem Sprühabschnitt (106) kommt, zum Tank (103) oder zum Einlass (107) der Pumpe (104) zu gestatten und um in einer geschlossenen Position die Zirkulation von Behandlungsflüssigkeit zu blockieren, und
- die Steuereinheit (113) eingerichtet ist, um einen Startschritt (300) des Sprühsystems (100) durchzuführen, der die folgenden Unterschritte umfasst:
∘ Zuordnen (301) eines ersten Schwellendruckwerts (V1) dem Schwellendruck (Ps) des Druckreglers (105), wobei der erste Schwellendruckwert (V1) strikt kleiner als der vorher festgelegte Eichdruck (Pt) der Druckbegrenzer (111) ist,
∘ Umschalten (302) des ersten Verteilers (110) von jedem der Sprühabschnitte (106) und des zweiten Verteilers (112) in geöffnete Position, so dass eine Zirkulation der Behandlungsflüssigkeit ab der Pumpe (104) zum Tank (103) oder zum Einlass (107) der Pumpe (104) durch jeden der Sprühabschnitte (106) ohne Zerstäubung durch die Sprühdüse(n) (109) der Sprühabschnitte (106) erhalten wird.

2. Sprühsystem (100) nach Anspruch 1, umfassend ferner einen Drucksensor (115), der ausgelegt ist, um einen Druck (Pm) im Kreis (101) nach der Pumpe (104) und vor dem Druckregler (105) und jedem Sprühabschnitt (106) zu messen, und wobei die Steuereinheit (113) ausgelegt ist, um den Unterschritt des Umschaltens (302) des ersten Verteilers (110) von jedem der Sprühabschnitte (106) und des zweiten Verteilers (112) in geöffnete Position während des Startschritts (300) durchzuführen, wenn der vom Drucksensor (115) gemessene Druck (Pm) etwa gleich dem ersten Schwellendruckwert (V1) ist.

3. Sprühsystem (100) nach Anspruch 1 oder Anspruch 2, wobei die Steuereinheit (113) ausgelegt ist, um während des Startschritts (300) und nach dem Unterschritt des Umschaltens (302) des ersten Verteilers (110) von jedem der Sprühabschnitte (106) und des zweiten Verteilers (112) in geöffnete Position einen Unterschritt des Warnens (303) des Benutzers mittels einer Benutzerschnittstelle (114) durchzuführen, wobei seit einem vorher festgelegten Ausgangszeitpunkt eine vorher festgelegte Startdauer vergangen ist.

4. Sprühsystem (100) nach einem der Ansprüche 1 bis 3, wobei die Steuereinheit (113) ausgelegt ist, um während des Startschritts (300) und nach dem Unterschritt des Umschaltens (302) des ersten Verteilers (110) von jedem der Sprühabschnitte (106) und des zweiten Verteilers (112) in geöffnete Position einen Unterschritt des Umschaltens (304) des ersten Verteilers (110) von jedem der Sprühabschnitte (106) und des zweiten Verteilers (112) in geschlossene Position durchzuführen.

5. Sprühsystem (100) nach Anspruch 4, wobei die Steuereinheit (113) ferner ausgelegt ist, um einen Sprühschritt (400) durchzuführen, der die dem Startschritt (300) folgenden Unterschritte umfasst:
- Zuordnen (402) eines zweiten Schwellendruckwerts (V2) dem Schwellendruck (Ps) des Druckreglers (105), wobei der zweite Schwellendruckwert (V2) strikt größer als oder gleich dem vorher festgelegten Eichdruck (Pt) der Druckbegrenzer (111) ist,
- Umschalten (403) des ersten Verteilers (110) mindestens eines Sprühabschnitts (106) in geöffnete Position, so dass Behandlungsflüssigkeit mittels der Sprühdüse(n) (109) versprüht wird, wenn der Druck in dem mindestens einen Sprühabschnitt (106) den zweiten Schwellendruckwert (V2) erreicht.

6. Sprühsystem (100) nach einem der Ansprüche 1 bis 5, wobei jeder Sprühabschnitt (106) ein Rückschlagventil (117) umfasst, das sich nach dem vom ersten Verteiler (110) und parallel zu der oder den Sprühvorrichtungen (109) des Sprühabschnitts (106) befindet.

7. Sprühverfahren (500) mittels eines Sprühsystems (100) nach einem der Ansprüche 1 bis 6, wobei das Verfahren einen Startschritt (300) umfasst, der selbst die folgenden Unterschritte umfasst:
- Zuordnen (301) eines ersten Schwellendruckwerts (V1) dem Schwellendruck (Ps) des Druckreglers (105), wobei der erste Schwellendruckwert (V1) strikt kleiner als der vorher festgelegte Eichdruck (Pt) der Druckbegrenzer (111) ist,
- Umschalten (302) des ersten Verteilers (110) von jedem der Sprühabschnitte (106) und des zweiten Verteilers (112) in geöffnete Position, so dass eine Zirkulation der Behandlungsflüssigkeit ab der Pumpe (104) zum Tank (103) oder zum Einlass (107) der Pumpe (104) durch jeden der Sprühabschnitte (106) ohne Zerstäubung durch die Sprühdüse(n) (109) der Sprühabschnitte (106) erhalten wird.

8. Sprühverfahren (500) nach Anspruch 7, wobei während des Startschritts (300) der Unterschritt des Umschaltens (302) des ersten Verteilers (110) von jedem der Sprühabschnitte (106) und des zweiten Verteilers (112) in geöffnete Position durchgeführt wird, wenn ein im Kreis (101) nach der Pumpe (104) und vor dem Druckregler (105) und jedem Sprühabschnitt (106) gemessener Druck (Pm) etwa gleich dem ersten Schwellendruckwert (V1) ist.

9. Sprühverfahren (500) nach Anspruch 7 oder Anspruch 8, das während des Startschritts (300) und nach dem Unterschritt des Umschaltens (302) des ersten Verteilers (110) von jedem der Sprühabschnitte (106) und des zweiten Verteilers (112) in geöffnete Position einen Unterschritt des Warnens (303) des Benutzers umfasst, wobei seit einem vorher festgelegten Ausgangszeitpunkt eine vorher festgelegte Startdauer vergangen ist.

10. Sprühverfahren (500) nach einem der Ansprüche 7 bis 9, das während des Startschritts (300) und nach dem Unterschritt des Umschaltens (302) des ersten Verteilers (110) von jedem der Sprühabschnitte (106) und des zweiten Verteilers (112) in geöffnete Position einen Unterschritt des Umschaltens (304) des ersten Verteilers (110) von jedem der Sprühabschnitte (106) und des zweiten Verteilers (112) in geschlossene Position umfasst.

11. Sprühverfahren (500) nach Anspruch 10, das ferner einen Sprühschritt (400) umfasst, der die dem Startschritt (300) folgenden Unterschritte umfasst:
- Zuordnen (402) eines zweiten Schwellendruckwerts (V2) dem Schwellendruck (Ps) des Druckreglers (105), wobei der zweite Schwellendruckwert (V2) strikt größer als oder gleich dem vorher festgelegten Eichdruck (Pt) der Druckbegrenzer (111) ist,
- Umschalten (403) des ersten Verteilers (110) mindestens eines Sprühabschnitts (106) in geöffnete Position, so dass Behandlungsflüssigkeit mittels der Sprühdüse(n) (109) versprüht wird, wenn der Druck in dem mindestens einen Sprühabschnitt (106) den zweiten Schwellendruckwert (V2) erreicht.

## Claims

1. A spraying system (100) for an agricultural machine comprising a spraying boom (102) extending along a main extension direction and a circuit (101) comprising:
- a tank (103) for containing a treatment liquid;
- a pump (104) comprising an inlet (107) and an outlet (108), the pump (104) being designed to suck the treatment liquid contained in the tank (103) from the inlet (107) and to discharge the treatment liquid sucked through the outlet (108);
- a pilot-acting pressure regulator (105) communicating, upstream, with the outlet (108) of the pump (104) and, downstream, with the tank (103) or the inlet (107) of the pump (104), the pressure regulator (105) being designed to regulate pressure in the circuit (101) downstream of the pump (104) and upstream of the pressure regulator (105) to a threshold pressure (Ps);
- a plurality of spraying segments (106) mounted to the spraying boom (102), each spraying segment (106) comprising:
o at least one spraying device (109) comprising at least one spraying nozzle (109a) designed to spray treatment liquid onto the plants to be treated in the field,
o a first dispenser (110) communicating, upstream, with the outlet (108) of the pump (104) and, downstream, with the spraying device(s) (109) of the spraying segment (106), the first dispenser (110) being designed to allow, in an opening position, a flow of treatment liquid discharged through the outlet (108) of the pump (104) to the spraying device(s) (109) of the spraying segment (106), and to block, into a closing position, said flow of treatment liquid,
∘ a direct-acting pressure limiter (111) interposed between the first dispenser (110) and the spraying nozzle(s) (109a) of each spraying device (109) of the spraying segment (106), the or each pressure limiter (111) being designed to allow a flow of treatment liquid from the first dispenser (110) to the spraying nozzle(s) (109a) with which it communicates, when a pressure in the spraying segment (106), upstream of the pressure limiter (111), is greater than or equal to a predefined adjustment pressure (Pt);
- a control unit (113);
the spraying system (100) being **characterised in that**:
- the circuit (101) further comprises a second dispenser (112) communicating, upstream, with each spraying segment (106) and, downstream, with the tank (103) or inlet (107) of the pump (104), the second dispenser (112) being designed to allow, in an opening position, a flow of treatment liquid from each spraying segment (106) to the tank (103) or inlet (107) of the pump (104), and to block, in a closing position, said flow of treatment liquid; and
- the control unit (113) is designed to implement a step of priming (300) the spraying system (100) comprising the sub-steps of:
o assigning (301) a first threshold pressure value (V1) to the threshold pressure (Ps) of the pressure regulator (105), the first threshold pressure value (V1) being strictly lower than the predefined adjustment pressure (Pt) of the pressure limiters (111),
o switching (302) the first dispenser (110) of each of the spraying segments (106) and the second dispenser (112) into the opening position, so as to achieve a flow of the treatment liquid from the pump (104) to the tank (103) or the inlet (107) of the pump (104) through each of the spraying segments (106), without spraying by the spraying nozzle(s) (109) of the spraying segments (106).

2. The spraying system (100) according to claim 1, further comprising a pressure sensor (115) designed to measure a pressure (Pm) in the circuit (101), downstream of the pump (104) and upstream of the pressure regulator (105) and of each spraying segment (106), and wherein the control unit (113) is designed to implement the sub-step of switching (302) the first dispenser (110) of each of the spraying segments (106) and the second dispenser (112) into the opening position, during the priming step (300), when the pressure (Pm) measured by the pressure sensor (115) is substantially equal to the first threshold pressure value (V1).

3. The spraying system (100) according to claim 1 or claim 2, wherein the control unit (113) is designed to implement, during the priming step (300) and after the sub-step of switching (302) the first dispenser (110) of each of the spraying segments (106) and the second dispenser (112) into the opening position, a sub-step of warning (303) the user by means of a user interface (114), a predetermined priming time duration having elapsed since a predefined initial time instant.

4. The spraying system (100) according to one of claims 1 to 3, wherein the control unit (113) is designed to implement, during the priming step (300) and after the sub-step of switching (302) the first dispenser (110) of each of the spraying segments (106) and the second dispenser (112) into the opening position, a sub-step of switching (304) the first dispenser (110) of each of the spraying segments (106) and the second dispenser (112) into the closing position.

5. The spraying system (100) according to claim 4, wherein the control unit (113) is further designed to implement a spraying step (400) comprising the sub-steps, subsequent to the priming step (300), of:
- assigning (402) a second threshold pressure value (V2) to the threshold pressure (Ps) of the pressure regulator (105), the second threshold pressure value (V2) being greater than or equal to the predefined adjustment pressure (Pt) of the pressure limiters (111),
- switching (403) the first dispenser (110) of at least one spraying segment (106) into the opening position, so as to spray treatment liquid by means of the spraying nozzle(s) (109), when the pressure in at least one spraying segment (106) reaches the second threshold pressure value (V2).

6. The spraying system (100) according to one of claims 1 to 5, wherein each spraying segment (106) comprises a non-return valve (117) located downstream of the first dispenser (110) and in parallel to the spraying device(s) (109) of said spraying segment (106).

7. A spraying method (500) by means of a spraying system (100) according to one of claims 1 to 6, the method comprising a priming step (30) in turn comprising the sub-steps of:
- assigning (301) a first threshold pressure value (V1) to the threshold pressure (Ps) of the pressure regulator (105), the first threshold pressure value (V1) being strictly lower than the predefined adjustment pressure (Pt) of the pressure limiters (111),
- switching (302) the first dispenser (110) of each of the spraying segments (106) and the second dispenser (112) into the opening position, so as to obtain a flow of treatment liquid from the pump (104) to the tank (103) or the inlet (107) of the pump (104) through each of the spraying segments (106), without spraying by the spraying nozzle(s) (109) of the spraying segments (106).

8. The spraying method (500) according to claim 7, wherein, during the priming step (300), the sub-step of switching (302) the first dispenser (110) of each of the spraying segments (106) and the second dispenser (112) into the opening position, is implemented when a pressure (Pm) measured in the circuit (101), downstream of the pump (104) and upstream of the pressure regulator (105) and of each spraying segment (106), is substantially equal to the first threshold pressure value (V1).

9. The spraying method (500) according to claim 7 or claim 8, comprising, during the priming step (300) and after the sub-step of switching (302) the first dispenser (110) of each of the spraying segments (106) and the second dispenser (112) into the opening position, a sub-step of warning (303) the user, a predetermined priming time duration having elapsed since a predefined initial time instant.

10. The spraying method (500) according to one of claims 7 to 9, comprising, during the priming step (300), and after the sub-step of switching (302) the first dispenser (110) of each of the spraying segments (106) and the second dispenser (112) into the opening position, a sub-step of switching (304) the first dispenser (110) of each of the spraying segments (106) and the second dispenser (112) into the closing position.

11. The spraying method (500) according to claim 10, further comprising a spraying step (400), comprising the sub-steps, subsequent to the priming step (300), of:
- assigning (402) a second threshold pressure value (V2) to the threshold pressure (Ps) of the pressure regulator (105), the second threshold pressure value (V2) being greater than or equal to the predefined adjustment pressure (Pt) of the pressure limiters (111),
- switching (403) the first dispenser (110) of at least one spraying segment (106) into the opening position, so as to spray treatment liquid by means of the spraying nozzle(s) (109), when the pressure in at least one spraying segment (106) reaches the second threshold pressure value (V2).
